# EUROPEAN PATENT SPECIFICATION

(11) **EP 2 243 350 B1**
(45) Date of publication and mention of the grant of the patent: **27.04.2016**
(21) Application number: 09711399.7
(22) Date of filing: 13.02.2009
(51) Int. Cl.: A01G 3/00, C09K 3/18, A01G 13/06

(54) **CRYOPROTECTIVE AQUEOUS COMPOSITION AND METHODS FOR IMPLEMENTING SAME**
WÄSSRIGE KRYOPROTEKTIVE ZUSAMMENSETZUNG UND EINSATZVERFAHREN DAFÜR
COMPOSITION AQUEUSE CRYOPROTECTRICE ET PROCÉDÉS POUR SON APPLICATION

(30) Priority: 14.02.2008 ES 200800405
(43) Date of publication of application: 27.10.2010
(73) Proprietor: Cryoprotectors & Biotechnologies, S.l., 48008 Bilbao (ES)
(72) Inventor: MORATIEL YUGUEROS, Ruben, Avenida Senda del Rey s/n 28040 Madrid (ES); DURAN ALTISENT, Jose, Maria, Avenida Senda del Rey s/n 28040 Madrid (ES); SOLER PERALES, Jose, 20011 San Sebastian (ES)
(74) Representative: Carpintero Lopez, Francisco
(86) International application number: PCT/ES2009/000087
(87) International publication number: WO 2009/101230

(56) References cited:
- WO-A1-98/35561
- WO-A2-2004/093658
- US-A- 4 954 279
- US-A- 4 954 279
- US-A- 5 653 054
- US-A- 5 653 054
- US-A- 5 772 912
- US-A- 6 040 272

## Description

### Technical Field of the Invention

The present invention relates to the field of cryoprotective treatments for removing ice on plant species, specifically, the invention relates to cryoprotective compositions useful for removing frost from lawns, especially sport lawns.

### Background of the Invention

It is a fact that temperatures below 0ºC periodically cause considerable damages, either temporary or permanent, in a large number of plant species.

The formation of frost associated to low temperatures can cause damages in certain plants. In lawn species, frost usually does not cause direct damages to the plants, although if it lasts a long time it is possible for the plant species to present a symptom or even die.

However, it is true that while there is frost on the lawn surface it is not recommendable to walk over it, since treading can cause an irreversible damage on the plant due to the cuts and injuries caused by the friction of ice crystals in the plant tissue. Furthermore, independently from the previously described damage, a lawn which is under the frost makes it impossible to correctly perform the sport intended to be played thereon.

The formation of frost depends on many factors although the most outstanding are low temperature and relative air humidity. This makes frost be a complex and hard-to-predict phenomenon.

Normally, the frost is removed from sport lawns in a natural manner, i.e., waiting for the ambient temperature to increase gradually as the morning passes and the sun warms the lawn.

Nevertheless, this can last several hours or even all the morning, making it impossible to perform many of the sports activities played on this surface or making them be played in very reduced and undesired times. This problem is especially important in the golf courses since playing 18 holes takes several hours therefore it is quite usual to start playing early in the morning when frost tends to be present. Furthermore, the lawn surface of a golf course is very wide and it cannot be opened to the public until the persons responsible for the golf course do not assure that the entire surface of the course is completely thawed, which occasionally entails considerable financial losses for golf clubs.

In some cases the lawn surface can be treated with a wetting agent i.e., a compound which reduces the surface tension of the water (surfactant), allowing its draining and evacuation in areas where water accumulates for the purpose of not accumulating water thereon and preventing the formation of part of the frost as much as possible. These treatments are usually not normal and are used indirectly since the application thereof is not aimed at preventing the appearance of frost. Furthermore, they do not provide homogeneous results in the lawn, which results in the co-existence of frozen and non-frozen areas. This, therefore, does not solve the problem in golf courses.

It is therefore necessary to develop cryoprotective compositions capable of quickly and homogeneously removing frost from lawns. Likewise, it is important for the composition to not be harmful or phytotoxic and to not affect the life cycle of the plant.

Some cryoprotective compositions for plants have already been described in the state of the art, although none of them is specifically intended for the care and removal of frost from sport lawns.

For example, US 5124061 describes a method for increasing the resistance of the plants to damage by freezing conditions comprising applying an aqueous composition of a choline salt with a monocarboxylic or polycarboxylic acid. Said composition can further contain glycerin, propylene glycol and surfactants based on ethylene oxide and propylene oxide condensates.

Patent US 5252118 relates to a method for producing a cryoprotectant for plants based on pectins depolymerized in the presence of phosphoric acid as a base of said cryoprotectant which further includes a nutrient solution based on salts of sodium, potassium, iron, magnesium, manganese, zinc, copper and borax.

Patent US 4735737 also relates to the use of pectins, specifically, to the use of a protective foam formed by three parts of egg whites and one part of pectin extracted from apples for reduced-scale applications, such as in gardening.

Patent US 4618442, in turn, provides a composition of non-ionic surfactants based on ethylene oxide and propylene oxide combined with urea for cryoprotection.

Patent US 5133891 describes a product based on aluminum tris-[O-ethyl phosphonate] which is used to attack bacteria inducing the formation of ice crystals, whereas in patent US 4161084 the protection of the plants is achieved by applying a family of bacteria acting antagonistically to those inducing the formation of ice, maintaining a balance between them.

Patent US 5223015 uses tetrahydrofurfuryl alcohol and tetrahydrofurfuryl amine, alone or in combination, as cryoprotective substances.

US 5653054 discloses an aqueous composition for preventing frost in plants base don alcohols and a thickening agent.

US 6040272 discloses an herbicidal composition containing surfactants and one or more glycol ethers.

US 4954279 describes an aircraft de-icing and anti-icing composition based on the use of glycols as the main component thereof.

The present invention presents an alternative cryoprotective composition to those already mentioned having great advantages with respect to the previous compositions in terms of reducing frost in plants. The composition is easily dispersible by spraying therefore it can be used to treat large lawn surfaces. The composition of the invention is especially adapted for removing frost from sport lawns and serves both for removing frost and for preventing the appearance thereof.

### Brief Description of the Drawings

Figure 1 shows the tests to determine the most suitable composition for removing frost.
Figure 2 depicts the phytotoxicity tests carried out to determine the suitable concentration for applying the cryoprotective composition.
Figure 3 depicts the phytotoxicity tests to determine the application doses necessary for preventing phytotoxicity.
Figure 4 depicts the action time of the composition at different doses.

### Description of the Invention

A first aspect of the invention relates to a cryoprotective aqueous composition comprising two or more alcohols and at least one surfactant compound.

In the context of the invention, cryoprotectant is understood as that compound or composition which, applied by means of spraying, is capable either of removing the already formed ice or of preventing the formation thereof.

In a particular embodiment of the invention the cryoprotective aqueous composition of the invention comprises:
(i) between 20-99% (w/w) of alcohols
(ii) between 0.001-0.1 (w/w) of surfactants

In a preferred embodiment of the invention, said cryoprotective aqueous composition comprises between:
(i) 98% (w/w) of alcohols
(ii) 0.01 % (w/w) of surfactant.

Although the cryoprotective composition must be diluted for the application thereof as will be explained below it is preferred that it is in concentrated form for distribution and transportation reasons.

In the context of the invention the generic term "alcohol" relates to chemical compounds with one or more hydroxyl groups and with a number of carbons between 1 and 6 such as, for example, short chain compounds with a hydroxyl group such as methanol, ethanol, propanol or butanol or with two or three hydroxyl groups such as 1,2-propanediol or glycerin.

In a preferred embodiment of the invention, a combination of ethanol with other short chain alcohols such as methanol, propanol, butanol or 1,2-propanediol or glycerin is used. The combination of ethanol with glycerin or mixtures of ethanol with other short chain alcohols such as methanol, propanol, butanol or 1,2-propanediol and with glycerin is especially preferred.

The alcohols of the cryoprotective composition of the invention are capable of being combined with the water molecules of frost and lowering the freezing point thereof, causing the melting of the ice. The alcohols of the cryoprotective composition of the invention act directly on the ice deposited in the lawn surface and do not damage the aerial part of the plant or the root system since they do not accumulate in the soil.

On the other hand, if the cryoprotective composition is sprayed before the frost occurs the formation thereof can be prevented due to the fact that the alcohols remain to a certain extent adhered to the plant cuticles for a while after spraying. This effect of adhesion is mainly favored due to glycerin because for this application, i.e., for preventing the appearance of frost, it is preferable for one of the alcohols present in the composition to be glycerin. The composition provides protection against freezing conditions therefore the composition can be sprayed a certain time before the appearance of frost.

Surfactants are another element of the composition. If the composition is sprayed before the formation of frost, the surfactants favor that the water in liquid state does not accumulate in the surface of the plants, therefore aiding in preventing the appearance of frost. If the cryoprotective composition is sprayed when frost has already formed, the surfactants favor that the water which is being liquefied by the action of the alcohols is drained from the surface of the plants as it thaws, which serves to speed up the thawing process.

The surfactants applicable in the cryoprotective composition of the invention are selected from a very heterogeneous group such as for example oxyethylenated and oxypropylenated fatty alcohols, oxyethylenated sorbitol esters, alkyl-aryl sulfonates of sodium, ammonium and ethanolamines, oxyethylenated fatty acids, ethoxylated and propoxylated polyglycols, ethoxylated and propoxylated alkylamines, dioctyl sodium sulfosuccinate and polyethers.

In a preferred embodiment trisiloxane polyether is used as surfactant agent. This surfactant bound to the alcohols shows a synergic effect enhancing the individual effect of each one, an effective composition for removing frost being obtained.

In addition to the already mentioned elements, the cryoprotective aqueous composition can also comprise odorant and colorant compounds. The former have the function of providing a pleasant odor to the composition and the latter of providing a color to the composition allowing not only calibrating the degree of dilution thereof upon diluting it in water for the application thereof, but also distinguishing which areas have been sprayed and which have not.

The cryoprotective composition of the invention has several advantages in terms of the application thereof to lawns since it has been demonstrated that it is effective in removing frost in a time which can fluctuate between 15 minutes and 1 hour from spraying, depending on the amount of frost, the intensity of the freezing conditions and the ambient temperature. Since short chain alcohols are preferably used, the latter do not accumulate in the soil since they are mostly volatilized after taking effect, which also makes them non-toxic for the plants at the recommended dose.

Furthermore, the cryoprotective solution of the invention assures that the results are homogeneous in the entire surface of the field, either in a shaded area or in a sunny area.

Another aspect of the invention relates to a method for removing frost from plants comprising dispersing the previously described cryoprotective composition in the form of a solution diluted with 70-90% of water, preferably 80%, on the plants with frost.

In other words, starting from the concentrated composition which, as has been previously mentioned, has a concentration of alcohols between 20-99%, preferably 98%, it must be diluted as necessary in water until obtaining a concentration of alcohols of approximately between 10 and 30%, preferably 20%. Under these dilution parameters, the cryoprotective composition of the invention shows a high capacity for removing frost in addition to not having phytotoxic effects on the lawn.

On the other hand, the composition of the invention can also be used in a method for preventing the appearance of frost in plants comprising spraying the cryoprotective composition of the invention in a form diluted with 70-90% of water, preferably 80%, on the plants before the appearance of frost.

In other words, as in the case of removing frost, the cryoprotective composition of the invention must be diluted to a concentration of alcohols of approximately 10-30%, preferably 20%. When the application of the cryoprotective composition is for the use thereof in a method for preventing the appearance of frost it is preferable for glycerin to be included among the alcohols of the invention which, as has been previously mentioned, favors the effect of adhesion of the composition to the plant cuticles.

As has been previously mentioned this composition is especially adapted for the application thereof in sport lawns.

A final aspect of the invention relates to the use of the composition of the invention, cryoprotective composition of the invention, for the thawing and/or cryoprotection of plants.

### Examples

### Example 1: Selection of the active substance

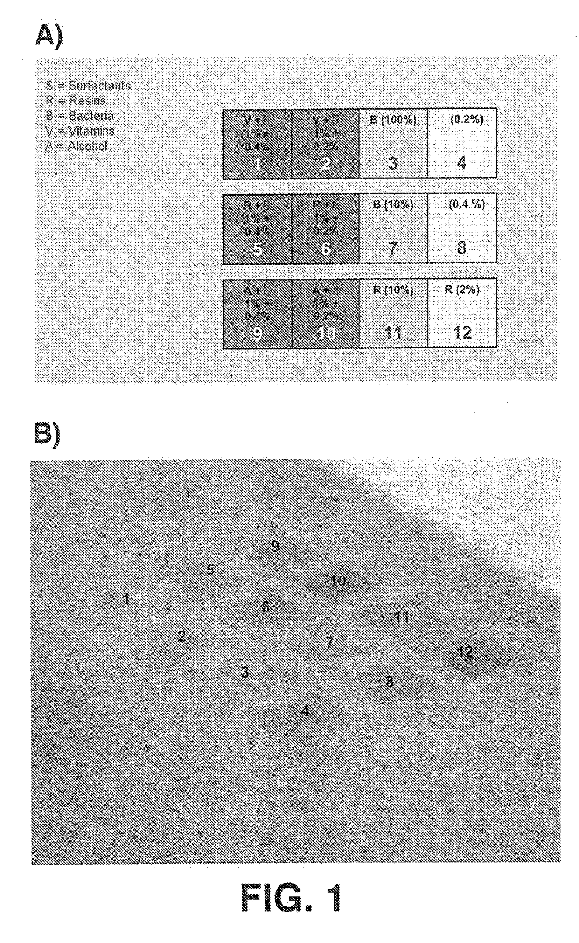

A series of tests were conducted with different active substances or combination of active substances for the purpose of determining which of them could be more suitable for removing frost from sport lawns. Figure 1A schematically shows the conducted tests as a result of which the active substances which would form the final composition could be determined.

Trisiloxane polyether in a volume percentage that never exceeded 0.4% was tested as surfactant compound. This surfactant was tested both as sole active ingredient (quadrants 4 and 8) and in combination with other agents (quadrants 1-2, 5-6 and 9-10). Resins derived from the acrylic acid in a volume percentage never greater than 10% were tested both as sole active ingredient (quadrant 11 and 12) and in combination with trisiloxane polyether (quadrants 5 and 6). The bacteria *Pseudomonas fluorescens* in a variable concentration of the culture broth diluted in water (quadrants 3 and 7) was also tested as cryoprotectant. The combination of vitamin E (never above 1% in solution) with trisiloxane polyether (quadrants 1 and 2) was also tested. Finally, a mixture of alcohols (glycerin and ethanol) in which the concentrations do no exceed 1% by volume in combination with trisiloxane polyether at different concentrations were tested.

The assessment of the test results which are shown in Figure 1B was visually performed. The best results were obtained from the combination of alcohols and surfactants, therefore successive tests were conducted with this combination.

### Example 2: Phototoxicity tests

The cryoprotective composition selected in Example 1 was always used, although at different concentrations and dilutions, for the purpose of finding out which treatment could be optimal for use in the sport lawn.

The species on which the cryoprotectants were tested, was *Agrostis stolonifera* var. "A4", a species and variety used for golf course greens. It is characterized by being very thin and short, therefore it is very often used in golf courses. This variety adapts well to the continental climate, to the dry and sunny environment, and it is also more resistant to pitting than other varieties of the same species. The golf course green must have a height of 3 mm, therefore it is cut once a day in summer, and every two days the rest of the year. Nevertheless once the tests started, the treated green was not cut until the end thereof to verify that the treatments did not affect the growth and life cycle of the plant.

The tested sample unit was a surface of 1 m². In total, 6 m² were used and a different treatment was applied, by means of fan spraying, on each of them. Each sample square was separated from the following one by a passage of 20 cm, which served as control and facilitated the visual comparison between the different treatments.

The cryoprotectant used for the tests result from a mixture of glycerin and ethanol with a ratio by volume of 1 to 4 respectively. It was estimated that the optimal solutions should be in a range comprised between 10 and 30% (w/w) of the alcohols in aqueous dilution. It was to be expected that the more concentrated the product, the more efficient it would be, but it was necessary to assess the phytotoxicity. The purpose of the tests consisted of adjusting the doses and concentrations of the product to prevent these phytotoxicity problems, achieving at the same time the quick removal of the frost from the lawn surface.

### Test 1: Search for application concentration

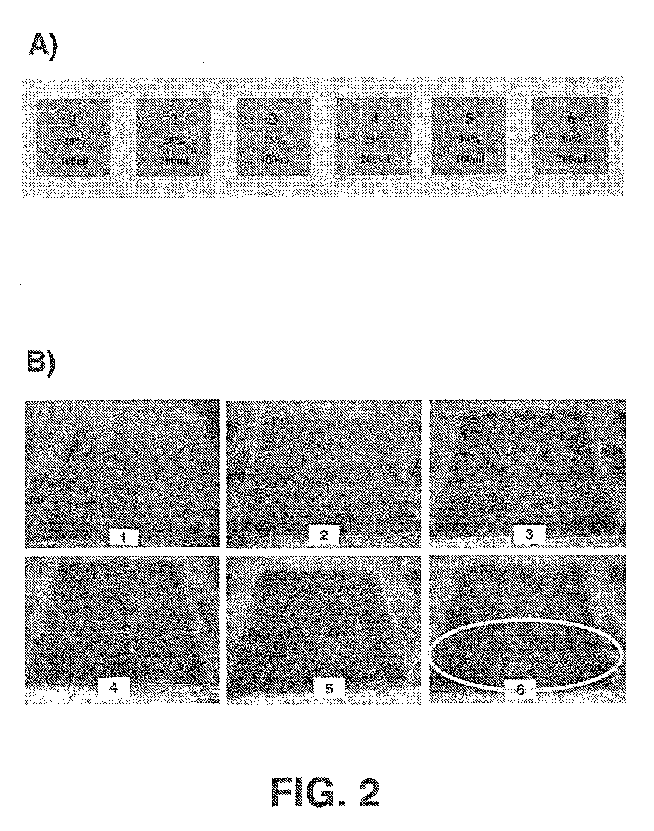

Daily treatments were performed, for 10 consecutive days, in the six sample units, using the composition at concentrations of 20, 25 and 30%, in a dosage of 0.1 L (the dose considered as normal) or 0.2 L (twice the normal dose). Figure 2A schematizes the six samples and the solutions which are applied to each of them.

The green was meticulously observed everyday before and after performing the treatments, and half an hour after the application a macroscopic analysis was performed and the surface was touched to see if the frost had disappeared, or if there was less frost than in the control. The loss of color of the green or yellowing determined the existence of phytotoxicity.

The results after 10 days (see Figure 2B) only show a certain degree of yellowing and therefore of phytotoxicity for the sample at 30% and in the amount of 0.2 L/m².

### Test 2: Application doses

The second phytotoxicity test consisted of performing treatments in the six sample units (6 m²), using the cryoprotectant (mixture of ethanol and glycerin) at a concentration which was around 20% although in doses of 1 L or 2 L (10 and 20 times the normal treatment dose). In this case, the possibility of using concentrations greater than 25% was dismissed because they could cause phytotoxicity problems. Nevertheless the increase in the dose volume could also be harmful for the lawn. The intention was to find out the tolerance of the plant to this mixture of cryoprotectants.

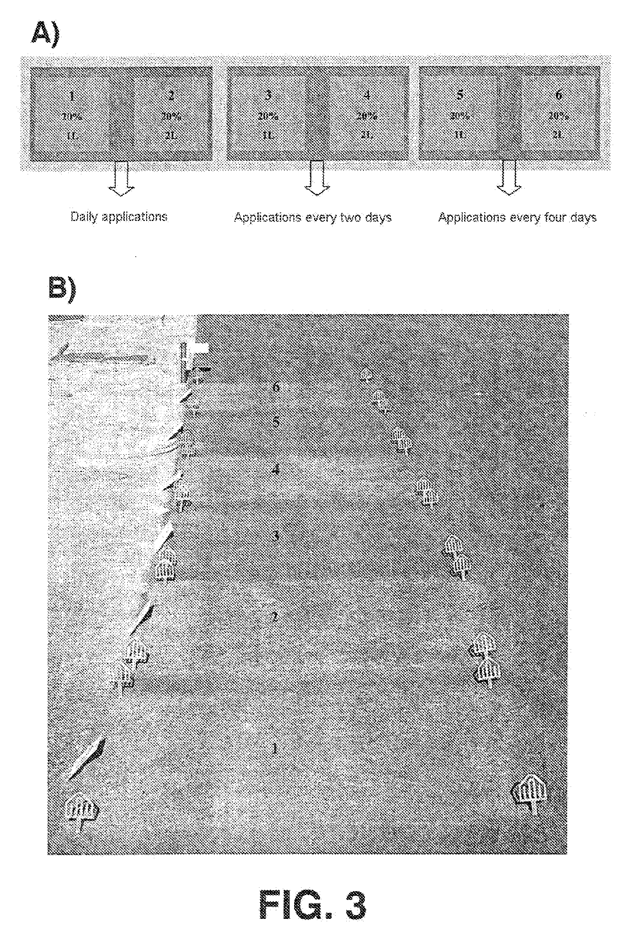

Figure 3A details the six samples and the solutions which were applied to each of them.

In the results shown in Figure 3B it is observed how the dose also affects the toxicity in the plant. With doses of 2 L/m², there were problems even by spacing out the treatments (sample units 4 and 6). With doses of 1 L/m², symptoms of toxicity were seen with daily treatments but not with spaced out treatments (sample units 3 and 5).

The application dose can therefore never exceed the amount of 1 L/m² and it is recommended that successive treatments not be repeated in these doses, conveniently treatments on alternate days

### Example 3: Effectiveness of the selected cryoprotectant.

The assessment of the effectiveness of the selected cryoprotectant was performed in a very intuitive and visual way, i.e., if upon applying the cryoprotectant on the frost, it is in turn is capable of removing such frost after a time of less than 30 minutes has elapsed, the treatment is considered as effective. Table 1 shows the different treatments performed for the effectiveness test.

**Table 1**

| **TREATMENT** | **DOSE (L /m²)** | **TIME ELAPSED FROM THE APPLICATION (min.)** |
|---|---|---|
| 1 | 0.25 | 30 |
| 2 | 0.25 | 15 |
| 3 | 0.25 | 10 |
| 4 | 0.25 | 5 |
| 5 | 0.1 | 30 |
| 6 | 0.1 | 15 |
| 7 | 0.1 | 10 |
| 8 | 0.1 | 5 |

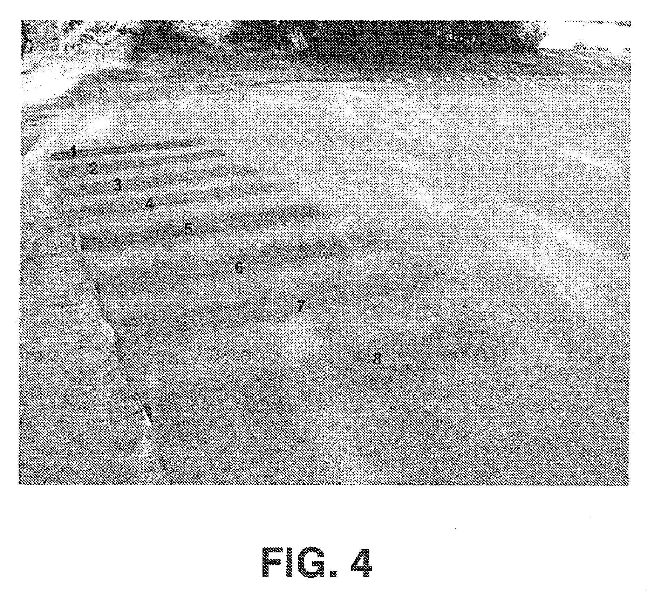

Figure 4 shows the effect of the effectiveness of the selected cryoprotectant with two application doses 0, 1 L/m² and 0.25 L/m² after different times from the application. It is observed that the best treatments, 5 and 1, are obtained after 30 minutes from the application.

## Claims

1. Cryoprotective aqueous composition comprising two or more alcohols in a proportion between 20% and 99% (w/w) and at least one surfactant in a proportion between 0.001 and 0.1 % (w/w).

2. Cryoprotective aqueous composition according to claim 1, comprising 98% of alcohols and 0.01 % of surfactant.

3. Cryoprotective aqueous composition according to any of claims 1-2, wherein the alcohols are selected from alcohols with a number of carbons comprised between 1 and 6 and one or more hydroxyl groups.

4. Cryoprotective aqueous composition according to any of claims 1-3, wherein the alcohols are glycerol and ethanol.

5. Cryoprotective aqueous composition according to any of the previous claims, wherein the surfactant is trisiloxane polyether.

6. Cryoprotective aqueous composition according to any of the previous claims, additionally comprising an additive such as odorants or colorants.

7. Method for removing frost from plants comprising spraying a cryoprotective aqueous composition according to claims 1-6 on the plants with frost.

8. Method according to claim 7, wherein the cryoprotective aqueous composition is sprayed with an alcohol content of approximately between 10-30%.

9. Method according to claims 7 or 8, wherein the cryoprotective aqueous composition is sprayed in a lawn.

10. Method for preventing the appearance of frost in plants comprising spraying a cryoprotective composition according to claims 1-6 on the plants before the appearance of frost.

11. Method according to claim 10, wherein the cryoprotective aqueous composition is sprayed with an alcohol content of approximately 10-30%.

12. Method according to claims 10 or 11, wherein at least one of the alcohols of the composition is glycerin.

13. Method according to claims 10-12, wherein the aqueous composition is sprayed in a lawn.

14. Use of the cryoprotective composition according to claims 1-6 for the thawing and/or cryoprotection of plants.

15. Use according to claim 14, wherein the plant is a lawn.

## Patentansprüche

1. Kryoprotektive wässrige Zusammensetzung mit zwei oder mehr Alkoholen in einem Anteil zwischen 20 und 99 Gewichtsprozent und mindestens einem oberflächenaktiven Stoff in einem Anteil zwischen 0,001 und 0,1 Gewichtsprozent.

2. Kryoprotektive wässrige Zusammensetzung nach Anspruch 1, mit 98% Alkoholen und 0,01% des oberflächenaktiven Stoffs.

3. Kryoprotektive wässrige Zusammensetzung nach einem der Ansprüche 1 bis 2, wobei die Alkohole aus Alkoholen mit einer Anzahl von Kohlenstoffen zwischen 1 und 6 und einer oder mehreren Hydroxylgruppen ausgewählt sind.

4. Kryoprotektive wässrige Zusammensetzung nach einem der Ansprüche 1 bis 3, wobei es sich bei den Alkoholen um Glycerol und Ethanol handelt.

5. Kryoprotektive wässrige Zusammensetzung nach einem der vorhergehenden Ansprüche, wobei es sich bei dem oberflächenaktiven Stoff um Trisiloxanpolyether handelt.

6. Kryoprotektive wässrige Zusammensetzung nach einem der vorhergehenden Ansprüche, darüber hinaus einen Zusatzstoff wie z.B. Geruchsstoffe oder Farbstoffe aufweisend.

7. Verfahren zum Entfernen von Frost von Pflanzen, welches umfasst, eine kryoprotektive wässrige Zusammensetzung nach den Ansprüchen 1 bis 6 auf die mit Frost behafteten Pflanzen zu sprühen.

8. Verfahren nach Anspruch 7, wobei die kryoprotektive wässrige Zusammensetzung mit einem Alkoholgehalt von ungefähr 10 bis 30% versprüht wird.

9. Verfahren nach Anspruch 7 oder 8, wobei die kryoprotektive wässrige Zusammensetzung auf einen Rasen gesprüht wird.

10. Verfahren zur Verhinderung des Erscheinens von Frost an Pflanzen, das umfasst, eine kryoprotektive Zusammensetzung nach den Ansprüchen 1 bis 6 auf die Pflanzen zu sprühen, bevor der Frost kommt.

11. Verfahren nach Anspruch 10, wobei die kryoprotektive wässrige Zusammensetzung mit einem Alkoholgehalt von ungefähr 10 bis 30% versprüht wird.

12. Verfahren nach Anspruch 10 oder 11, wobei es sich bei zumindest einem der Alkohole der Zusammensetzung um Glycerin handelt.

13. Verfahren nach den Ansprüchen 10 bis 12, wobei die wässrige Zusammensetzung auf einen Rasen gesprüht wird.

14. Verwendung der kryoprotektiven Zusammensetzung nach den Ansprüchen 1 bis 6 zum Auftauen und/oder zum Kälteschutz von Pflanzen.

15. Verwendung nach Anspruch 14, wobei es sich bei den Pflanzen um einen Rasen handelt.

## Revendications

1. Composition aqueuse cryoprotectrice comprenant deux alcools ou plus dans une proportion comprise entre 20 % et 99 % (en poids) et au moins un tensioactif dans une proportion comprise entre 0,001 et 0,1 % (en poids).

2. Composition aqueuse cryoprotectrice selon la revendication 1, comprenant 98 % d'alcools et 0,01 % de tensioactif.

3. Composition aqueuse cryoprotectrice selon l'une quelconque des revendications 1 et 2, dans laquelle les alcools sont choisis parmi les alcools ayant un nombre d'atomes de carbone compris entre 1 et 6 et un ou plusieurs groupes hydroxyle.

4. Composition aqueuse cryoprotectrice selon l'une quelconque des revendications 1 à 3, dans laquelle les alcools sont du glycérol et de l'éthanol.

5. Composition aqueuse cryoprotectrice selon l'une quelconque des revendications précédentes, dans laquelle le tensioactif est du polyéther de trisiloxane.

6. Composition aqueuse cryoprotectrice selon l'une quelconque des revendications précédentes, comprenant en outre un additif tel que des substances odorantes ou des colorants.

7. Procédé d'élimination de gel de végétaux comprenant la pulvérisation d'une composition aqueuse cryoprotectrice selon l'une quelconque des revendications 1 à 6 sur les plantes avec du gel.

8. Procédé selon la revendication 7, dans lequel la composition aqueuse cryoprotectrice est pulvérisée avec une teneur en alcool comprise entre environ 10 et 30 %.

9. Procédé selon les revendications 7 ou 8, dans lequel la composition aqueuse cryoprotectrice est pulvérisée sur une pelouse.

10. Procédé pour prévenir l'apparition de gel sur les plantes comprenant la pulvérisation d'une composition cryoprotectrice selon les revendications 1 à 6 sur les végétaux avant l'apparition de gel.

11. Procédé selon la revendication 10, dans lequel la composition aqueuse cryoprotectrice est pulvérisée avec une teneur en alcool d'environ 10 à 30 %.

12. Procédé selon les revendications 10 ou 11, dans lequel au moins un des alcools de la composition est de la glycérine.

13. Procédé selon les revendications 10 à 12, dans lequel la composition aqueuse est pulvérisée sur une pelouse.

14. Utilisation de la composition cryoprotectrice selon les revendications 1 à 6 pour le dégel et/ou la cryoprotection de végétaux.

15. Utilisation selon la revendication 14, dans laquelle le végétal est une pelouse.
